# FASCICULE DE BREVET EUROPEEN

(11) **EP 3 169 877 B1**
(45) Date de publication et mention de la délivrance du brevet: **16.05.2018**
(21) Numéro de dépôt: 15753109.6
(22) Date de dépôt: 16.07.2015
(51) Int. Cl.: F01D 21/14, F02C 7/232, F02C 9/46

(54) **PROCÉDÉ DE COMMANDE D'UNE VANNE D'ARRÊT BISTABLE POUR MOTEUR D'AÉRONEF**
VERFAHREN ZUR STEUERUNG EINES BISTABILEN ABSPERRVENTILS FÜR EIN FLUGZEUGTRIEBWERK
METHOD FOR CONTROLLING A BISTABLE SHUTOFF VALVE FOR AN AIRCRAFT ENGINE

(30) Priorité: 18.07.2014 FR 1456953
(43) Date de publication de la demande: 24.05.2017
(73) Titulaire: SAFRAN AIRCRAFT ENGINES, 75015 Paris (FR)
(72) Inventeur: BUJON, Irene, F-77550 Moissy - Cramayel Cedex (FR)
(74) Mandataire: Regimbeau
(86) Numéro de dépôt international: PCT/FR2015/051957
(87) Numéro de publication internationale: WO 2016/009155

(56) Documents cités:
- EP-A1- 0 223 684
- EP-A2- 1 350 942
- WO-A1-2014/020262

## Description

### DOMAINE GENERAL

L'invention se rapporte au domaine des actionneurs pour moteur d'aéronef.

Elle concerne plus particulièrement un procédé et un dispositif pour commander une vanne d'arrêt pour moteur d'aéronef via plusieurs voies de commandes.

### ETAT DE L'ART

Un moteur d'aéronef comprend des actionneurs configurables dans une première position et dans une deuxième position de deux types : les actionneurs monostables et les actionneurs bistables.

Un actionneur monostable est configurable dans sa première position tant qu'il reçoit un signal de commande, et bascule dans sa deuxième position lorsque ce signal de commande cesse.

Un actionneur bistable est configurable dans la première position au moyen d'un premier signal de commande, et dans la deuxième position au moyen d'un deuxième signal de commande. En l'absence de l'un de ou l'autre de ces deux signaux, l'actionne bistable ne change pas de position.

Il est par ailleurs courant de commander un actionneur de moteur d'aéronef au moyen de plusieurs unités de commande parallèles, via des voies de commande indépendantes. Ainsi, si l'une de ces unités subit une défaillance, l'actionneur peut encore être piloté par une autre unité.

Toutefois, si l'une de ces unités de commandes subit une défaillance, un actionneur de type bistable peut être amené à recevoir le premier signal et le deuxième signal simultanément par deux voies différentes. Ces deux signaux contradictoires empêchent l'actionneur de fonctionner correctement.

Pour certains actionneurs bistables, notamment ceux utilisés en cas d'urgence pour éviter des pannes catastrophiques de l'aéronef, un tel dysfonctionnement en présence de deux signaux contradictoires est particulièrement préjudiciable. En effet, positionner ces actionneurs utilisés en cas d'urgence dans l'une de leurs deux positions revêt un caractère prioritaire par rapport à les positionner dans leur autre position, et la réception simultanées des deux signaux contradictoires met en péril cette priorisation.

A titre d'exemple, certaine pannes peuvent conduire un moteur d'aéronef à délivrer une poussée supérieure à un seuil maximal autorisé. De telles pannes, qui sont connues sous la terminologie anglaise TCM (« Thrust Control Malfunction »), rendent l'aéronef incontrôlable sur certaines phases de vol, et sont donc catastrophiques. Pour éviter ces pannes de type TCM, le moteur de l'aéronef est généralement équipé d'une vanne d'arrêt prévue pour couper le moteur en urgence, reliée à plusieurs voies de commande.

Il est donc primordial de privilégier la fermeture de cette vanne lorsque cette vanne se trouve dans une situation où elle reçoit un signal d'ouverture et un signal de fermeture simultanément

Plusieurs solutions ont été envisagées pour éviter le blocage d'un tel actionneur de moteur d'aéronef.

Une première solution consiste à implémenter la détection de pannes TCM et le contrôle de la poussée sur des cartes électroniques séparées, et une deuxième solution consiste à utiliser un actionneur spécialement dédié pour couper le moteur en cas d'une panne TCM.

Toutefois, ces deux solutions nécessitant de modifier l'architecture requièrent des modifications ou des équipements supplémentaires dédiés à la prise en charge de ces pannes TCM. Ces deux solutions sont donc particulièrement onéreuses et complexes à mettre oeuvre.

Une troisième solution consiste à utiliser un actionneur monostable avec priorité mécanique à la fermeture: quand on cesserait d'envoyer un signal de commande à une telle vanne monostable, celle-ci se fermerait et couperait le moteur. Or, un tel actionneur monostable aurait tendance à se fermer à sur de nombreuses pannes simples, ce qui détériorerait grandement la robustesse du système au pannes simples vis-à-vis de la coupure moteur, ainsi que le taux d'arrêt en vol (IFSD, « In flight shutdown »).

Une quatrième solution consiste à utiliser un actionneur bistable et de lui fournir une paire de signaux de commande contradictoires d'intensités différentes. Le signal d'intensité plus forte serait alors privilégié dans le cas de réception simultanée de deux signaux contradictoire via plusieurs voies de commande. Toutefois, cette quatrième solution présente l'inconvénient de devoir modifier de façon substantielle le fonctionnement interne de la vanne d'arrêt pour répondre correctement à ces signaux de commande d'intensités différentes.

### PRESENTATION DE L'INVENTION

L'invention vise donc à éviter le blocage d'une vanne d'arrêt de moteur d'aéronef recevant des commandes contradictoires, tout en palliant les inconvénients précités.

Il est donc proposé un procédé de commande d'une vanne d'arrêt bistable pour moteur d'aéronef reliée à deux voies de commande selon la revendication 1, la vanne comprenant une palette mobile entre une première position dans laquelle la vanne est fermée et une deuxième position dans laquelle la vanne est ouverte, le procédé comprend des étapes de :
- émission sur l'une des voies de commande d'un signal de fermeture qui sollicite la palette vers la première position,
- émission sur l'autre voie de commande d'un signal d'ouverture qui sollicite la palette vers la deuxième position,
le procédé étant caractérisé en ce que:
- l'amplitude du signal de fermeture est ajustée à une valeur d'actionnement adaptée pour solliciter la palette vers la première position de façon constante dans un intervalle de temps de durée donnée,
- dans le même intervalle de temps, l'amplitude du signal d'ouverture est à ajustée à des valeurs oscillant entre une valeur d'actionnement adaptée pour solliciter la vanne vers la deuxième position et une valeur de repos adaptée pour laisser l'élément mobile non sollicité,
les valeurs d'actionnement des deux signaux étant mutuellement adaptées pour appliquer à la palette des forces qui s'annulent et maintenir la palette immobile, lorsque les deux signaux reçus par la vanne prennent simultanément lesdites valeurs d'actionnement dans l'intervalle de temps donné.

Lorsque les deux signaux sont reçus simultanément par la vanne pendant l'intervalle de temps susmentionné, la palette est sollicitée de deux façons différentes à des instants différents.

A certains instants de cet intervalle de temps, les deux signaux ont des amplitudes positionnées chacune à une valeur d'actionnement. La palette de la vanne reçoit alors deux ordres contradictoires : d'une part, l'ordre de basculer dans la première position (par le signal de fermeture), et d'autre part, l'ordre de basculer dans la deuxième position (par le signal d'ouverture) ; ces deux ordres se contrecarrent et la palette ne change pas de position.

A d'autres instants de cet intervalle de temps, le signal d'ouverture prend la valeur de repos. La palette reçoit alors l'ordre de basculer dans la première position (par le signal de fermeture), mais ne reçoit pas d'autre ordre contradictoire. La palette ne peut dans ces cas que basculer dans la première position, à moins qu'elle soit déjà dans cette première position. En revanche, la palette ne peut pas basculer dans la deuxième position, aucun ordre allant dans ce sens n'étant reçu par la vanne.

Au terme de la durée susmentionnée, la palette ne peut donc que se trouver dans sa première position (la vanne est alors fermée) même si deux signaux de fermeture et d'ouverture ont été simultanément envoyés à la vanne bistable.

Le procédé proposé permet donc de rendre prioritaire le signal de fermeture par rapport au signal d'ouverture lorsque ces deux signaux sont reçus simultanément par la vanne bistable.

Une situation dans laquelle le moteur ne peut s'éteindre sur survenance de pannes de type TCM décrites en introduction peut être ainsi évitée.

Un avantage du procédé proposé est qu'il peut être mise en oeuvre sur une architecture existante moyennant un nombre de modifications minimales au niveau des unités émettrices des signaux de commande.

Le procédé selon l'invention est avantageusement complété par les caractéristiques suivantes, prises seules ou en une quelconque de leurs combinaisons techniquement possibles.

Le deuxième signal peut être un signal périodique.

Cette forme permet d'éviter d'avoir à mettre en oeuvre une synchronisation particulière entre le signal d'ouverture et le signal de fermeture pour commander la vanne et rendre prioritaire le positionnement de la palette dans la première position.

Le deuxième signal peut être un signal en créneau. Un signal en créneau présente l'avantage de passer d'une valeur à l'autre de façon très rapide et donc de faire basculer la palette de façon rapide, stable, et prévisible.

Le signal de fermeture peut en outre être de valeur constante, et le signal d'ouverture peut être d'amplitude égale à la valeur du signal de fermeture.

Le signal d'ouverture peut être maintenu en alternance aux valeurs d'actionnement et de repos pendant des durées identiques.

Le procédé de commande peut comprendre la génération, par une première bobine, d'un champ magnétique à partir du signal de fermeture pour susciter un déplacement de la palette vers la première position, et la génération, par une deuxième bobine, d'un champ magnétique à partir du signal d'ouverture pour susciter un déplacement de la palette vers la deuxième position, les valeurs d'actionnement des deux signaux étant mutuellement adaptées pour que les deux champs magnétiques appliquent à la palette des forces qui s'annulent de sorte à maintenir la palette immobile.

Par ailleurs, le signal d'ouverture peut être maintenu à la valeur de repos et/ou à la valeur d'actionnement pendant une durée supérieure à la somme :
- d'un délai de montée en courant de la bobine, et
- de la durée prise par la palette pour basculer d'une des première et deuxième positions à une position intermédiaire comprise entre la première et la deuxième position, la position intermédiaire étant telle que la palette peut atteindre l'autre des première et deuxième positions depuis ladite position intermédiaire en l'absence de sollicitation de la palette par les bobines.

Le deuxième signal peut en outre être produit par conversion d'un signal de forme identique au premier signal. Ceci permet de mettre en oeuvre le procédé proposé de façon très simple sur une architecture existante fonctionnant avec des signaux de forme identique.

Il est également proposé, selon un deuxième aspect, un dispositif de commande d'une vanne d'arrêt bistable pour moteur d'aéronef selon la revendication 9, la vanne comprenant une palette mobile entre une première position dans laquelle la vanne est fermée et une deuxième position dans laquelle la vanne est ouverte, le dispositif comprenant :
- deux voies de commande reliées à la vanne,
- au moins une unité de fermeture adaptée pour émettre sur l'une des voies de commande un signal de fermeture adapté pour solliciter la palette vers la première position,
- au moins une unité d'ouverture adaptée pour émettre sur l'autre voie de commande un signal de fermeture adapté pour solliciter la palette vers la deuxième position,
le dispositif de commande étant caractérisé en ce que:
- l'unité de fermeture est configurée pour ajuster l'amplitude du signal de fermeture à une valeur d'actionnement adaptée pour solliciter la palette vers la première position de façon constante dans un intervalle de temps de durée donnée,
- l'unité d'ouverture est configurée pour, dans le même intervalle de temps, ajuster l'amplitude du signal d'ouverture à des valeurs qui oscillent entre une valeur d'actionnement adaptée pour solliciter la vanne vers la deuxième position et une valeur de repos adaptée pour laisser l'élément mobile non sollicité,
les valeurs d'actionnement des deux signaux étant mutuellement adaptées pour appliquer à la palette des forces qui s'annulent et maintenir la palette immobile, lorsque les deux signaux reçus par la vanne prennent lesdites valeurs d'actionnement simultanément dans l'intervalle de temps donné.

Il est en outre proposé, selon un troisième aspect, un système d'arrêt pour moteur d'aéronef comprenant :
- une vanne d'arrêt du moteur, comprenant une palette mobile entre une première position dans laquelle la vanne est fermée et une deuxième position dans laquelle la vanne est ouverte,
- le dispositif de commande de la vanne d'arrêt selon le deuxième aspect de l'invention évoqué ci-dessus.

Il est également proposé un moteur d'aéronef comprenant un tel système d'arrêt.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1 et 2 représentent schématiquement un système de commande selon un mode de réalisation de l'invention.
- La figure 3 représente une vanne d'arrêt pour moteur d'aéronef selon un mode de réalisation de l'invention.
- La figure 4 représente une paire de signaux de commande selon un mode de réalisation de l'invention, pour commander une vanne d'arrêt pour moteur d'aéronef.
- La figure 5 représente une paire de signaux de commande connus pour commander une vanne d'arrêt pour de moteur d'aéronef.
Sur l'ensemble des figures, les éléments similaires portent des références identiques.

### DESCRIPTION DETAILLEE DE L'INVENTION

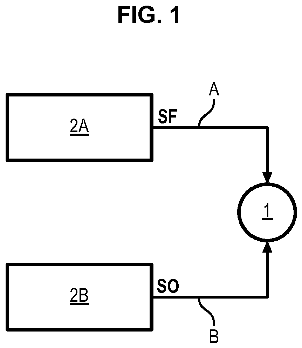

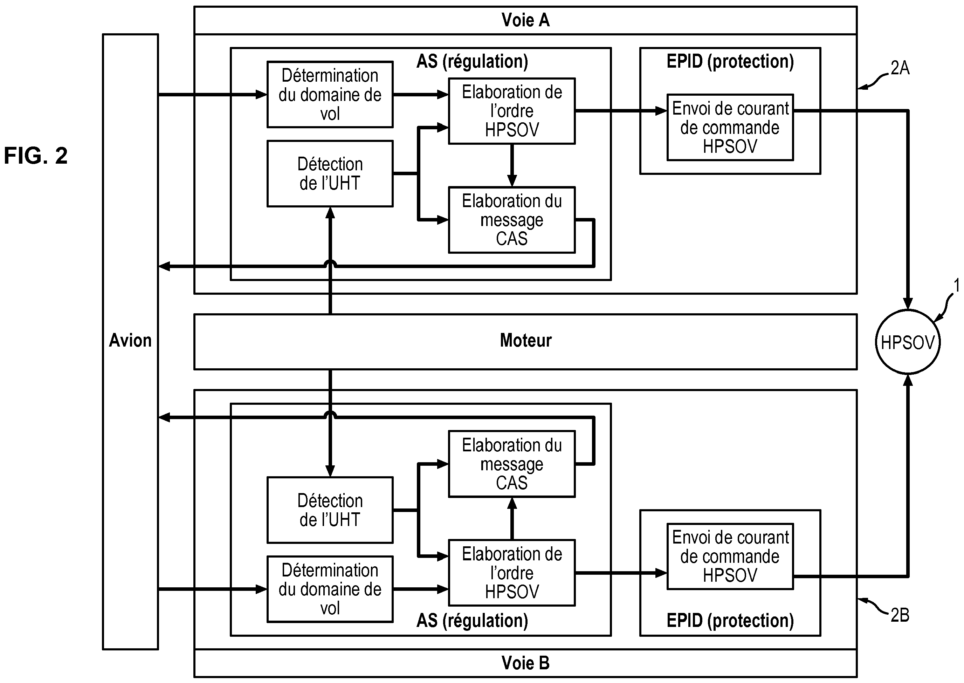

En référence aux **figures 1** **et** **2****,** un moteur d'aéronef comprend une vanne d'arrêt 1 du moteur et un dispositif de commande de cette vanne 1.

La vanne d'arrêt 1 a pour fonction d'arrêter le moteur de l'aéronef. Cette vanne peut typiquement être une vanne d'arrêt haute pression (communément appelée en anglais « High Pressure Shut Off Valve », abrégé en HPSOV).

Le dispositif de commande comprend au moins deux unités de commande 2A et 2B adaptées pour commander la vanne d'arrêt 1.

L'unité de commande 2A est reliée à la vanne 1 par une voie A et l'unité de commande 2B est reliée à la même vanne 1 par une voix B indépendante de la voix A.

Chacune des unités de commande 2A, 2B est adaptée pour émettre sur la voie de commande correspondante un signal de fermeture de la vanne ou un signal d'ouverture de la vanne.

Dans ce qui suit, on supposera que chacune de ces unités 2A, 2B peut émettre ces deux types de commande, mais on peut également envisager que le dispositif présente une architecture asymétrique dans laquelle l'une des unités est adapté pour émettre spécifiquement des commandes de fermeture de la vanne 1 et l'autre unité est adaptée pour émettre spécifiquement des commandes d'ouverture de la vanne 1.

La vanne d'arrêt 1 est bistable. On définit dans le présent texte une vanne bistable par une vanne capable de rester dans deux états stables lorsqu'elle n'est pas sollicitée par une action extérieure : un état ouvert et un état fermé. En l'occurrence, la vanne d'arrêt 1 ne peut pas changer d'état sans recevoir un signal de commande en provenance de la voie A ou de la voie B.

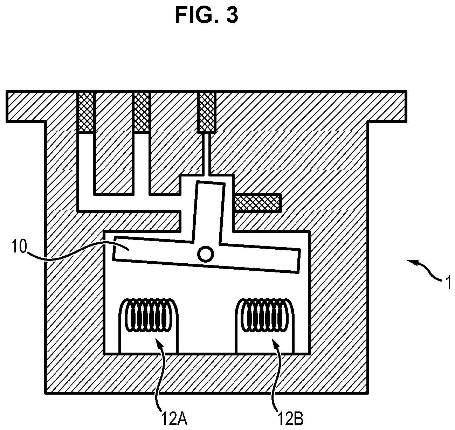

Dans un mode de réalisation illustré en figure 3, la vanne 1 comprend une palette 10. La palette est un élément mobile entre une position fermée et une position ouverte. Lorsque la palette est dans la position fermée, la vanne 1 est dans l'état fermé et couper le moteur de l'aéronef s'il est en fonctionnement. En revanche, le moteur peut fonctionner tant que la palette est dans la position ouverte (la vanne 1 est alors dans son état ouvert).

La vanne 1 comprend par ailleurs une première bobine 12A, et une deuxième bobine 12B.

Chaque bobine 12A, 12B est adaptée pour solliciter un déplacement de la palette lorsque cette bobine est traversée par un courant d'intensité différente à une valeur de repos IR (typiquement nulle).

Plus précisément, la palette 10 présente une forme de T mobile en rotation. La branche supérieure de ce T comprend deux extrémités opposées, chaque extrémité étant agencée en regard d'une bobine respective.

La bobine 12A est reliée à la voie de commande A. La bobine 12B est reliée à la voie de commande B.

Lorsque la bobine 12A est traversée par un courant selon une première intensité prédéterminée en provenance de la voie A, cette bobine 12A émet un champ magnétique qui repousse l'extrémité de la palette 10 en regard ; lorsque cette bobine 12A est traversée par un courant selon une deuxième intensité de signe opposé à la première intensité, cette bobine émet un champ magnétique qui attire vers elle cette même de la palette 10 en regard.

Lorsque la bobine 12B est traversée par un courant selon une troisième intensité en provenance de la voie B, cette bobine 12B émet un champ magnétique qui repousse l'extrémité de la palette 10 en regard ; lorsque cette bobine 12A est traversée par un courant selon une quatrième intensité de signe opposé à la troisième intensité, cette bobine émet un champ magnétique qui attire vers elle cette même extrémité de la palette 10 en regard.

Les deux bobines 12A et 12B sont identiques. On supposera que chaque bobine, lorsqu'on lui applique une intensité de valeur IO, dite valeur d'ouverture, sollicite la palette vers la position ouverte.

On suppose également que chaque bobine, lorsqu'on lui applique une intensité de valeur IF, dite valeur de fermeture, sollicite la palette vers la position fermée.

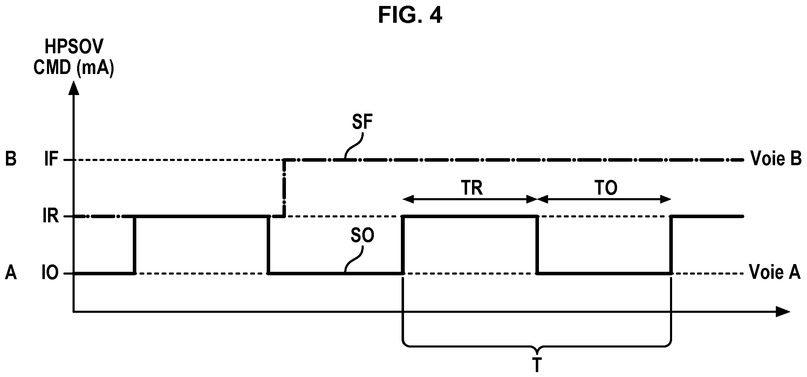

On va maintenant décrire une paire de signaux pour commander l'ouverture et la fermeture de la vanne 1 selon un mode de réalisation illustré en **figure 4****.**

La vanne 1 bistable est commandée par deux signaux différents : un signal d'ouverture SO et un signal de fermeture SF.

Pour fermer la vanne 1, une unité de commande quelconque (2A ou 2B) émet sur la voie correspondante un signal de fermeture d'intensité constante égale à la valeur IF. Le signal de fermeture SF se maintient à cette valeur IF pendant une durée suffisante pour que la bobine correspondante sollicite la palette 10 vers la position fermée.

Pour ouvrir la vanne 1, une unité de commande quelconque 2A ou 2B émet un signal d'ouverture SO sur la voie correspondante, ce signal d'ouverture étant un signal périodique dont l'intensité oscille entre la valeur IR et la valeur IO. Lorsque le signal d'ouverture S0 prend la valeur IR la bobine qui reçoit le signal d'ouverture ne sollicite pas la palette 10. En revanche, lorsque le signal électrique prend la valeur IO, cette même bobine sollicite la palette 10 vers la position d'ouverture de la vanne 1.

Dans le mode de réalisation illustré sur la figure 4, le signal d'ouverture est un signal en créneau. Une période T de ce signal en créneau comprend deux paliers successifs : un palier à la valeur IR et un palier à la valeur IO. En d'autre termes, le signal d'ouverture SO prend la valeur IR pendant une durée TR et prend la valeur IO pendant une durée TO, la période T étant sensiblement égal à la somme TO+TR grâce à la forme en créneau du signal d'ouverture SO (le signal d'ouverture en créneau passant de façon quasiment instantanée de la valeur IO à la valeur IR et vice-versa).

La durée TR est choisie supérieure à la somme de
- d'un délai de montée en courant de la bobine, et
- de la durée prise par la palette pour basculer d'une des première et deuxième positions à une position intermédiaire comprise entre la première et la deuxième position, la position intermédiaire étant telle que la palette peut atteindre l'autre des première et deuxième positions depuis ladite position intermédiaire en l'absence de sollicitation de la palette par les bobines.

Les durées TR et TO peuvent être choisies identiques ou différentes.

Les valeurs IF et IO peuvent être choisies égales, de signe opposé.

Ceci permet d'utiliser des bobines 12A et 12B identiques et de fonctionnement symétrique, qui sont courantes et simples de fonctionnement.

Le signal d'ouverture SO ne sollicite le déplacement de la palette par l'intermédiaire d'une des bobines que par intermittences, tandis que le signal de fermeture sollicite de façon constante pendant une durée au moins égale à la période T du signal d'ouverture S0 illustré sur la figure 4.

La présence des deux voies A et B pour commander la vanne d'arrêt 1 rend possible trois cas de fonctionnement.

Dans un premier cas de fonctionnement, l'une des deux unités émet un signal de commande (SO ou SF) sur la voie correspondante tandis que l'autre unité n'émet aucun signal sur la voie correspondante.

Dans un deuxième cas de fonctionnement, les deux unités émettent simultanément un signal de commande de même type (SO ou SF).

Ces deux cas de fonctionnement ne posent pas de problème étant donné que la vanne 1 peut basculer vers l'état visé par le type de la ou les commandes émises.

Dans un troisième cas de fonctionnement, les deux unités émettent simultanément des signaux contradictoires. On prend ici l'exemple dans lequel l'unité 2A émet sur la voie A émet le signal d'ouverture SO et l'unité 2B émet simultanément le signal le de fermeture SF pendant une durée supérieure à la période T.

Durant la période T, la bobine 12B est constamment sollicitée pour déplacer la palette 10 vers sa position de fermeture, tandis que la bobine 12A n'est sollicitée pour déplacer la palette vers la position d'ouverture de la vanne que pendant la durée T0 inférieure à T.

Plus précisément, dans l'intervalle T0, la bobine 12A sollicite la palette vers sa position d'ouverture tandis que la bobine 12B sollicite contradictoirement la palette 10 vers la position de fermeture. Le caractère bistable de la vanne empêche la vanne de changer d'état.

Dans l'intervalle TR, la palette 10 est sollicitée vers sa position de fermeture (par le signal de fermeture SF positionné à l'intensité IF), mais ne n'est pas sollicitée contradictoire ment vers sa position d'ouverture (le signal d'ouverture SO étant alors positionné à la valeur IR). La palette ne peut dans cet intervalle que basculer dans la position fermée, à moins qu'elle n'y se trouve déjà. En revanche, la vanne ne peut pas basculer dans l'état ouvert, aucun ordre allant dans ce sens n'étant reçu par les bobines 12A et 12B.

A l'issue de la période T, la palette 10 est ainsi obligatoirement dans la position fermée. La palette reste dans cet état fermé tant que le signal SF est maintenu ou que le signal SO cesse d'être émis.

Le signal d'ouverture SO débute préférentiellement par un palier à la valeur IO de façon à éviter des retards dans l'exécution de l'ouverture de la vanne 1.

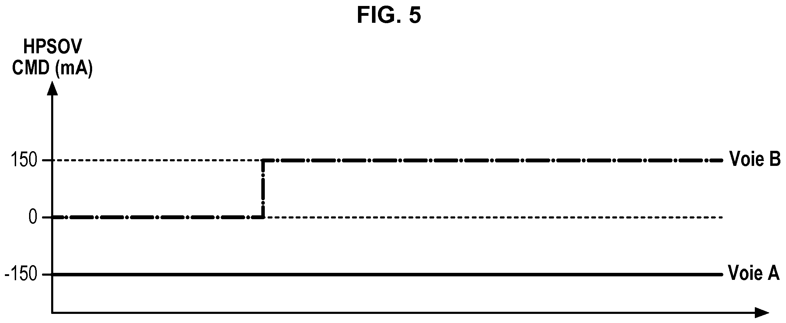

La **figure 5** représente une paire de signaux d'ouverture et de fermeture classiques pour commander un actionneur bistable. Contrairement à la paire de signaux présentée en figure 4, ces deux signaux connus sont de formes identiques car tous les deux maintenus à des niveaux respectifs constants.

Le procédé peut ainsi comprendre une étape de conversion du signal d'ouverture connu constant en le signal d'ouverture périodique (voire en créneau) ordonnant l'ouverture de la vanne par intermittence, conformément à ce qui a été présenté précédemment. On peut ainsi prévoir des unités de commande 2A et 2B agencées en sortie d'unités de commandes primaires adaptées pour générer cette paire de signaux constants, les unités 2A et 2B se bornant à modifier la forme du signal d'ouverture constant émis par les unités primaires en le signal d'ouverture intermittent déjà discuté.

Dans un exemple de réalisation du procédé, on choisit les valeurs suivantes : IF = 150 mA, IO = -150 mA, IR = 0 mA, TR = TO = 150 ms.

Il faut en effet typiquement 25ms à des bobines fonctionnant à +/-150 mA pour effectuer 90% de sa montée en courant, c'est-à-dire atteindre +/-135 mA. Dès que les +/-135mA sont atteints, la palette 10 commence à bouger. Dans cet exemple, Il faut que la vanne 1 soit commandée pendant au moins 100ms pour que la palette ait assez bougé, pour que celle-ci continue de se déplacer quand même dans la position désirée lorsque l'on cesse de commander la vanne 1. Ainsi si on commande l'ouverture de la vanne pendant seulement 125ms, elle s'ouvrira. Cependant, pour avoir un peu de marge, est préférable de choisir TO égale à 150ms. De même, pour fermer la vanne 1, il faudra que le courant de la voie fautive soit forcé à 0mA pendant 150ms.

Le procédé selon l'invention peut faire l'objet de nombreuses variantes.

Dans le mode de réalisation présenté précédemment, la vanne 1 est bistable. De plus, les deux bobines réagissent à des intensités de valeur absolue identique et les signaux d'ouverture et de fermeture présentent des valeurs IO et IF égales en valeur absolue. Il est cependant possible de prévoir deux bobines différentes 12A et 12B et/ou des signaux SO et SF de valeurs IO et IF respectives différentes, du moment que le signal d'ouverture et le signal de fermeture sont dimensionnés l'un par rapport à l'autre de sorte que la vanne ne change pas d'état lorsqu'elle reçoit ces deux signaux simultanément.

Les bobines 12A et 12B peuvent être remplacées par d'autres moyens commandés en intensité ou non (par exemple en tension), pour déplacer la palette.

Par ailleurs, les durées TR et TO peuvent être choisies différentes, selon le fonctionnement du ou des actionneurs choisis pour la vanne 1.

Le signal d'ouverture peut présenter d'autres formes périodiques, par exemple être de forme sinusoïdale.

## Revendications

1. Procédé de commande d'une vanne d'arrêt (1) bistable pour moteur d'aéronef reliée à deux voies de commande (A, B), la vanne (1) comprenant une palette (10) mobile entre une première position dans laquelle la vanne est fermée et une deuxième position dans laquelle la vanne est ouverte, le procédé comprend des étapes de :
- émission sur l'une des voies de commande (B) d'un signal de fermeture (SF) qui sollicite la palette (10) vers la première position,
- émission sur l'autre voie de commande (A) d'un signal d'ouverture (SO) qui sollicite la palette (10) vers la deuxième position,
le procédé étant **caractérisé en ce que**:
- l'amplitude du signal de fermeture (SF) est ajustée à une valeur d'actionnement adaptée pour solliciter la palette vers la première position de façon constante dans un intervalle de temps de durée donnée,
- dans le même intervalle de temps, l'amplitude du signal d'ouverture (SO) est à ajustée à des valeurs oscillant entre une valeur d'actionnement (IO) adaptée pour solliciter la vanne (1) vers la deuxième position et une valeur de repos (IR) adaptée pour laisser l'élément mobile (10) non sollicité,
dans lequel la valeur d'actionnement du signal de fermeture est adaptée pour faire basculer la palette dans la première position, lorsque le signal de fermeture reçu par la vanne prend ladite valeurs d'actionnement et lorsque le signal d'ouverture est simultanément à la valeur de repos, et dans lequel les valeurs d'actionnement des deux signaux sont mutuellement adaptées pour appliquer à la palette des forces qui s'annulent et maintenir la palette (10) immobile, lorsque les deux signaux reçus par la vanne prennent simultanément lesdites valeurs d'actionnement dans l'intervalle de temps donné.

2. Procédé de commande selon la revendication 1, dans lequel le signal d'ouverture (SO) est périodique.

3. Procédé de commande selon l'une des revendications 1 à 2, dans lequel le signal d'ouverture (SO) est en créneau.

4. Procédé de commande selon l'une des revendications 1 à 3, dans lequel la valeur d'actionnement du signal d'ouverture est égale à la valeur d'actionnement du signal de fermeture.

5. Procédé de commande selon l'une des revendications 1 à 4, dans lequel la vanne (1) comprend la génération, par une première bobine, d'un champ magnétique à partir du signal de fermeture pour susciter un déplacement de la palette (10) vers la première position, et la génération, par une deuxième bobine, d'un champ magnétique à partir du signal d'ouverture pour susciter un déplacement de la palette vers la deuxième position, les valeurs d'actionnement des deux signaux étant mutuellement adaptées pour que les deux champs magnétiques appliquent à la palette des forces qui s'annulent de sorte à maintenir la palette (10) immobile.

6. Procédé de commande selon l'une des revendications 1 à 5, dans lequel le signal d'ouverture (SO) est maintenu à la valeur de repos (IR) et/ou à la valeur d'actionnement pendant une durée (TO, TR) supérieure à la somme :
- d'un délai de montée en courant de la bobine, et
- de la durée prise par la palette pour basculer d'une des première et deuxième positions à une position intermédiaire comprise entre la première et la deuxième position, la position intermédiaire étant telle que la palette peut atteindre l'autre des première et deuxième positions depuis ladite position intermédiaire en l'absence de sollicitation de la palette par les bobines.

7. Procédé de commande selon l'une des revendications 1 à 7, dans lequel, le signal d'ouverture (SO) débute par un palier à une valeur d'actionnement (IO) adaptée pour solliciter l'actionneur (1) vers la deuxième position.

8. Procédé de commande selon l'une des revendications précédentes, le signal d'ouverture (SO) est produit par conversion d'un signal de forme identique à la forme du signal de fermeture (SF).

9. Dispositif de commande d'une vanne d'arrêt (1) bistable pour moteur d'aéronef, la vanne (1) comprenant une palette (10) mobile entre une première position dans laquelle la vanne est fermée et une deuxième position dans laquelle la vanne est ouverte, le dispositif comprenant :
- deux voies de commande (A, B) reliées à la vanne,
- au moins une unité de fermeture (2B) adaptée pour émettre sur l'une des voies de commande (B) un signal de fermeture (SF) adapté pour solliciter la palette (10) vers la première position,
- au moins une unité d'ouverture (2A) adaptée pour émettre sur l'autre voie de commande (A) un signal d'ouverture (SO) adapté pour solliciter la palette (10) vers la deuxième position,
le dispositif de commande étant **caractérisé en ce que**:
- l'unité de fermeture (2B) est configurée pour ajuster l'amplitude du signal de fermeture (SF) à une valeur d'actionnement adaptée pour solliciter la palette vers la première position de façon constante dans un intervalle de temps de durée donnée,
- l'unité d'ouverture (2A) est configurée pour, dans le même intervalle de temps, ajuster l'amplitude du signal d'ouverture (SO) à des valeurs qui oscillent entre une valeur d'actionnement (IO) adaptée pour solliciter la vanne (1) vers la deuxième position et une valeur de repos (IR) adaptée pour laisser l'élément mobile (10) non sollicité,
dans lequel la valeur d'actionnement du signal de fermeture est adaptée pour faire basculer la palette dans la première position, lorsque le signal de fermeture reçu par la vanne prend ladite valeur d'actionnement et lorsque le signal d'ouverture est simultanément à la valeur de repos, et dans lequel les valeurs d'actionnement des deux signaux sont mutuellement adaptées pour appliquer à la palette des forces qui s'annulent et maintenir la palette (10) immobile, lorsque les deux signaux reçus par la vanne prennent lesdites valeurs d'actionnement simultanément dans l'intervalle de temps donné.

10. Système d'arrêt pour moteur d'aéronef comprenant :
- une vanne d'arrêt du moteur (1), comprenant une palette (10) mobile entre une première position dans laquelle la vanne est fermée et une deuxième position dans laquelle la vanne est ouverte,
- un dispositif de commande de la vanne d'arrêt selon la revendication précédente.

11. Moteur d'aéronef comprenant un système d'arrêt selon la revendication 10.

## Patentansprüche

1. Verfahren zur Steuerung eines bistabilen Absperrventils (1) für Flugzeugmotor, das mit zwei Steuerbahnen (A, B) verbunden ist, wobei das Ventil (1) eine zwischen einer ersten Position, in welcher das Ventil geschlossen ist, und einer zweiten Position, in welcher das Ventil geöffnet ist, bewegliche Klappe (10) umfasst, wobei das Verfahren Schritte umfasst:
- des Sendens, über eine der Steuerbahnen (B), eines Verschlusssignals (SF), das die Klappe (10) in die erste Position beansprucht,
- des Sendens, über die andere Steuerbahn (A), eines Öffnungssignals (SO), welches die Klappe (10) in die zweite Position beansprucht,
wobei das Verfahren **dadurch gekennzeichnet ist, dass**:
- die Amplitude des Verschlusssignals (SF) an einen Betätigungswert angepasst ist, der geeignet ist, um die Klappe konstant in die erste Position in einem Zeitintervall bestimmter Dauer zu beanspruchen,
- im selben Zeitintervall die Amplitude des Öffnungssignals (SO) an Werte angepasst ist, die zwischen einem Betätigungswert (IO), der geeignet ist, um das Ventil (1) in die zweite Position zu beanspruchen, und einem Ruhewert (IR), der geeignet ist, um das bewegliche Element (10) nicht beansprucht zu lassen, schwanken,
wobei der Betätigungswert des Verschlusssignals geeignet ist, um die Klappe in die erste Position zu schwenken, wenn das von der Klappe erhaltene Verschlusssignal den Betätigungswert annimmt und wenn das Öffnungssignal gleichzeitig den Ruhewert annimmt, und wobei die Betätigungswerte der zwei Signale gegenseitig geeignet sind, um auf die Klappe Kräfte anzuwenden, die sich annullieren und die Klappe (10) unbewegt halten, wenn die zwei von dem Ventil empfangenen Signale gleichzeitig die Betätigungswerte in dem bestimmten Zeitintervall annehmen.

2. Steuerverfahren nach Anspruch 1, wobei das Öffnungssignal (SO) periodisch ist.

3. Steuerverfahren nach einem der Ansprüche 1 bis 2, wobei das Öffnungssignals (SO) zeitgerastert ist.

4. Steuerverfahren nach einem der Ansprüche 1 bis 3, wobei der Betätigungswert des Öffnungssignals gleich dem Betätigungswert des Verschlusssignals ist.

5. Steuerverfahren nach einem der Ansprüche 1 bis 4, wobei das Ventil (1) das Erzeugen, durch eine erste Spule, eines Magnetfelds ausgehend von dem Verschlusssignal, um eine Verlagerung der Klappe (10) in die erste Position zu veranlassen, und das Erzeugen, durch eine zweite Spule, eines Magnetfelds ausgehend von dem Öffnungssignal, um eine Verlagerung der Klappe in die zweite Position zu veranlassen, umfasst, wobei die Betätigungswerte der zwei Signale gegenseitig angepasst sind, damit die zwei Magnetfelder auf die Klappe Kräfte anwenden, die sich derart annullieren, dass die Klappe (10) unbewegt gehalten wird.

6. Steuerverfahren nach einem der Ansprüche 1 bis 5, wobei das Öffnungssignal (SO) auf dem Ruhewert (IR) und/oder auf dem Betätigungswert gehalten wird während einer Dauer (TO, TR) größer als die Summe:
- einer Zeit des Ansteigens des Stroms der Spule, und
- der Dauer, die von der Klappe benötigt wird, um von einer der ersten und zweiten Position in eine zwischen der ersten und der zweiten Position inbegriffene Übergangsposition zu schwenken, wobei die Übergangsposition derart ist, dass die Klappe bei Abwesenheit von Beanspruchung der Klappe durch die Spulen die andere der ersten und zweiten Position aus der Übergangsposition erreichen kann.

7. Steuerverfahren nach einem der Ansprüche 1 bis 7, wobei das Öffnungssignal (SO) mit einer Stufe auf einem Betätigungswert (IO) beginnt, der geeignet ist, um den Aktuator (1) in die zweite Position zu beanspruchen.

8. Steuerverfahren nach einem der vorangehenden Ansprüche, wobei das Öffnungssignal (SO) durch Konversion eines Signals identischer Form in die Form des Verschlusssignals (SF) erzeugt wird.

9. Steuervorrichtung eines bistabilen Absperrventils (1) für Flugzeugmotor, wobei das Ventil (1) eine zwischen einer ersten Position, in welcher das Ventil geschlossen ist, und einer zweiten Position, in welcher das Ventil geöffnet ist, bewegliche Klappe (10) umfasst, wobei die Vorrichtung umfasst:
- zwei mit dem Ventil verbundene Steuerbahnen (A, B),
- mindestens eine Verschlusseinheit (2B), die geeignet ist, um über eine der Steuerbahnen (B) ein Verschlusssignal (SF) zu senden, das geeignet ist, um die Klappe (10) in die erste Position zu beanspruchen,
- mindestens eine Öffnungseinheit (2A), die geeignet ist, um über die andere Steuerbahn (A) ein Verschlusssignal (SO) zu senden, das geeignet ist, um die Klappe (10) in die zweite Position zu beanspruchen,
wobei die Steuervorrichtung **dadurch gekennzeichnet ist, dass**:
- die Verschlusseinheit (2B) konfiguriert ist, um die Amplitude des Verschlusssignals (SF) an einen Betätigungswert anzupassen, der geeignet ist, um die Klappe konstant in die erste Position in einem Zeitintervall bestimmter Dauer zu beanspruchen,
- die Öffnungseinheit (2A) konfiguriert ist, um im selben Zeitintervall die Amplitude des Öffnungssignals (SO) an Werte anzupassen, die zwischen einem Betätigungswert (IO), der geeignet ist, um das Ventil (1) in die zweite Position zu beanspruchen, und einem Ruhewert (IR), der geeignet ist, um das bewegliche Element (10) nicht beansprucht zu lassen, schwanken,
wobei der Betätigungswert des Verschlusssignals geeignet ist, um die Klappe in die erste Position zu schwenken, wenn das von der Klappe erhaltene Verschlusssignal den Betätigungswert annimmt und wenn das Öffnungssignal gleichzeitig den Ruhewert annimmt, und wobei die Betätigungswerte der zwei Signale gegenseitig geeignet sind, um auf die Klappe Kräfte anzuwenden, die sich annullieren und die Klappe (10) unbewegt halten, wenn die zwei von dem Ventil empfangenen Signale gleichzeitig die Betätigungswerte in dem bestimmten Zeitintervall annehmen.

10. Absperrsystem für Flugzeugmotor, umfassend:
- ein Absperrventil des Motors (1), umfassend eine zwischen einer ersten Position, in welcher das Ventil geschlossen ist, und einer zweiten Position, in welcher das Ventil geöffnet ist, bewegliche Klappe (10),
- eine Steuervorrichtung des Absperrventils nach vorangehendem Anspruch.

11. Flugzeugmotor, umfassend ein Absperrsystem nach Anspruch 10.

## Claims

1. A method for controlling a bistable shut-off valve (1) for an aircraft engine connected to two control channels (A, B), the valve (1) comprising a pallet (10) movable between a first position in which the valve is closed and a second position in which the valve is open, wherein the method comprises steps of:
- emitting over one of the control channels (B) a closing signal (SF) which stresses the pallet (10) towards the first position,
- emitting over the other control channel (A) an opening signal (SO) which stresses the pallet (10) towards the second position,
wherein the method is **characterized in that**:
- the amplitude of the closing signal (SF) is adjusted to an actuation value adapted to stress the pallet towards the first position constantly in a time interval of given time period,
- in the same time interval, the amplitude of the opening signal (SO) is adjusted to values oscillating between an actuation value (IO) adapted to stress the valve (1) towards the second position and a rest value (IR) adapted to leave the movable element (10) not stressed,
wherein the actuation values of the two signals are mutually adapted to apply to the pallet forces which cancel each other out and keep the pallet (10) stationary, when the two signals received by the valve simultaneously take said actuation values in the given time interval.

2. The control method according to claim 1, wherein the opening signal (SO) is periodic.

3. The control method according to one of claims 1 to 2, wherein the opening signal (SO) is rectangular.

4. The control method according to one of claims 1 to 3, wherein the actuation value of the opening signal is equal to the actuation value of the closing signal.

5. The control method according to one of claims 1 to 4, wherein the valve (1) comprises generating, by a first coil, a magnetic field from the closing signal to create displacement of the pallet (10) towards the first position, and generating, by a second coil, a magnetic field from the opening signal to create displacement of the pallet towards the second position, the actuation values of the two signals being mutually adapted so that the two magnetic fields apply to the pallet forces which cancel each other out so as to keep the pallet (10) stationary.

6. The control method according to one of claims 1 to 5, wherein the opening signal (SO) is kept at the rest value (IR) and/or at the actuation value during a time period (TO, TR) greater than the sum of:
- a period for rise in current of the coil, and
- the time period taken by the pallet to switch from one of the first and second positions to an intermediate position comprised between the first and the second position, the intermediate position being such that the pallet can reach the other of the first and second positions from said intermediate position in the absence of stress of the pallet by the coils.

7. The control method according to one of claims 1 to 6, wherein the opening signal (SO) starts on a level of an actuation value (IO) adapted to stress the actuator (1) towards the second position.

8. The control method according to one of the preceding claims, the opening signal (SO) is produced by conversion of a signal of shape identical to the shape of the closing signal (SF).

9. A device for controlling a bistable shut-off valve (1) for an aircraft engine, the valve (1) comprising a pallet (10) movable between a first position in which the valve is closed and a second position in which the valve is open, the device comprising:
- two control channels (A, B) connected to the valve,
- at least one closing unit (2B) adapted to emit over one of the control channels (B) a closing signal (SF) adapted to stress the pallet (10) towards the first position,
- at least one opening unit (2A) adapted to emit over the other control channel (A) a closing signal (SO) adapted to stress the pallet (10) towards the second position,
the control device being **characterized in that**:
- the closing unit (2B) is configured to adjust the amplitude of the closing signal (SF) to an actuation value adapted to stress the pallet towards the first position constantly in a time interval of given time period,
- the opening unit (2A) is configured, in the same time interval, to adjust the amplitude of the opening signal (SO) to values which oscillate between an actuation value (IO) adapted to stress the valve (1) towards the second position and a rest value (IR) adapted to leave the movable element (10) not stressed,
the actuation values of the two signals being mutually adapted to apply to the pallet forces which cancel each other out and keep the pallet (10) stationary, when the two signals received by the valve take said actuation values simultaneously in the given time interval.

10. A shut-off system for an aircraft engine comprising:
- a shut-off valve of the engine (1), comprising a pallet (10) movable between a first position in which the valve is closed and a second position in which the valve is open,
- a device for controlling the shut-off valve according to the preceding claim.

11. An aircraft engine comprising a shut-off system according to claim 10.
